# EUROPÄISCHE PATENTSCHRIFT

(11) **EP 0 827 860 B1**
(45) Veröffentlichungstag und Bekanntmachung des Hinweises auf die Patenterteilung: **09.01.2002**
(21) Anmeldenummer: 97114200.5
(22) Anmeldetag: 18.08.1997
(51) Int. Cl.: B60K 31/00

(54) **Verfahren zur Abstandsregelung für ein Fahrzeug und Vorrichtung zur Durchführung des Verfahrens**
Method for distance control in a vehicle and device for carrying out the method
Méthode de commande de distance d'un véhicule et dispositif pour la mise en oeuvre de cette méthode

(30) Priorität: 04.09.1996 DE 19635815
(43) Veröffentlichungstag der Anmeldung: 11.03.1998
(73) Patentinhaber: Volkswagen Aktiengesellschaft, 38436 Wolfsburg (DE)
(72) Erfinder: Timm, Klaus, Prof., 21465 Wentorf (DE); Weisser, Hubert, Dr., 38165 Lehre (DE); Bergholz, Ralf, Dr., 38108 Braunschweig (DE)

(56) Entgegenhaltungen:
- EP-A- 0 545 437
- DE-A- 4 437 678
- DE-C- 4 209 047
- MUELLER R ET AL: "INTELLIGENT CRUISE CONTROL WITH FUZZY LOGIC" PROCEEDINGS OF THE INTELLIGENT VEHICLES SYMPOSIUM,1. Juni 1992 (1992-06-01), XP000199811

## Beschreibung

Die Erfindung betrifft ein Verfahren zur Abstandsregelung für ein Fahrzeug zu einem vorausfahrenden Fahrzeug nach dem Oberbegriff des Anspruchs 1 sowie eine Vorrichtung zur Durchführung dieses Verfahrens nach dem Oberbegriff des Anspruchs 9.

Bei einem bekannten, gattungsgemäßen Verfahren zur Geschwindigkeits- und Abstandsregelung eines Fahrzeugs (DE 42 00 694 A1) werden der aktuelle Abstand zu einem vorausfahrenden Fahrzeug als Istabstand sowie die momentane Fahrzeuggeschwindigkeit erfaßt. Zumindest aus der momentanen Fahrgeschwindigkeit wird ein Sollabstandswert ermittelt, der durch die Regelung eingehalten werden soll.

Ein Problem liegt dabei darin, daß Abstandsregelungen als fahrerunterstützende Systeme konzipiert werden, deren Akzeptanz durch den Fahrzeugführer davon abhängt, wie sehr das Regelverhalten seinem eigenen Fahrverhalten, insbesondere bei der Einhaltung des Abstands zum vorausfahrenden Kraftfahrzeug, ähnelt.

Um das Regelverhalten auf das Fahrverhalten des Fahrzeugführers abzustimmen und die Akzeptanz einer Abstandsregelung zu erhöhen, wird in der nicht vorveröffentlichten Patentanmeldung 196 24 616.4 innerhalb bestimmter Grenzen eine Änderungsmöglichkeit der Sollabstandsvorgabe durch den Fahrer vorgeschlagen. Dazu wird eine vorgebbare Folgezeit zum vorausfahrenden Fahrzeug manuell eingestellt. In einer alternativen Lösung wird in der nicht vorveröffentlichten Patentanmeldung 196 24 617.2 eine selbsttätige Anpassung des Sollabstands bzw. der Folgezeit an das individuelle Fahrverhalten des jeweiligen Fahrers vorgeschlagen. Dazu wird bevorzugt ein Fuzzy-Regler verwendet.

Zur Ermittlung der individuellen Fahrweise eines Fahrzeugführers wird außerdem in der deutschen Offenlegungsschrift DE 44 01 416 A1 vorgeschlagen, zur graduellen Fahrweisenklassifikation zwischen ruhiger und dynamischer Fahrweise Kennziffern zu ermitteln. Das Fahrweisenklassifikationsverfahren sieht die separate Ermittlung einer Kennziffer über das Beschleunigungsverhalten, einer Kennziffer über das Bremsverhalten und einer Kennziffer über das Lenkverhalten vor, wobei bevorzugt als fahrweisenindikative Meßgrößen nicht die Einstellungen von Lenkrad, Fahrpedal oder Gaspedal, sondern die Beschleunigungen in Längs- und Querrichtung herangezogen werden. Diese Vorgehensweise soll eine zuverlässige Klassifikation der verschiedenen Arten des Fahrverhaltens und eine entsprechend differenzierte Fahrweisenadaption der im Fahrzeug vorhandenen Steuer- oder Regelungssysteme erlauben.

Wie bei allen Regelungen treten auch bei den vorstehend genannten Abstandsregelungen Regelabweichungen auf, so daß die momentanen Istabstände regelmäßig von den vorgegebenen Sollabständen abweichen. Bei größeren, negativen Regelabweichungen, d.h. wenn der Istabstand deutlich geringer als der Sollabstand wird, ist eine erhöhte Aufmerksamkeit des Fahrers erforderlich und ggf. ein direkter Eingriff unter Umgehung der Abstandsregelung. Ein solcher Zustand kann insbesondere durch abrupte Bremsmanöver eines vorausfahrenden Fahrzeugs oder beim Einscheren eines anderen Fahrzeugs in den momentanen Istabstand auftreten. Da ein solcher eventuell kritischer Zustand, ähnlich wie bei Fahrten ohne Abstandsregelung, vom Fahrer nur durch ständige hohe Aufmerksamkeit erkannt werden kann, können der fahrerunterstützende und fahrerentlastende Effekt sowie die Akzeptanz solcher Abstandsregelungen reduziert sein.

Weiter ist ein Abstandswamsystem bekannt (DE 32 22 263 A1), bei dem zur Vermeidung von Fehlalarmen zwischen einem einfachen Überwachungsmodus für einfache Verkehrssituationen auf einen anderen Überwachungsmodus für komplexe Verkehrssituationen selbsttätig umgeschaltet wird. Komplexe Verkehrssituationen, wie sie vor allem im engen Stadtverkehr und auf kurvenreichen Landstraßen vorkommen, werden durch eine Bewertung der Fahrzeuggeschwindigkeit, des Lenkeinschlagwinkels und des Blinkerzustands von einfachen Verkehrssituationen, wie einfache Geradeausfahrten im weiträumigen Schnellverkehr, unterschieden. Es ist lediglich erwähnt, daß ein solches Abstandswarnsystem auch als Teil eines Abstands-Regelungssystems betrieben werden kann. Ob und wie ggf. eine Zusammenwirkung und Einbindung in ein Abstandsregelungssystem erfolgen kann, ist offen gelassen.

Zudem ist ein Verfahren zum Vermeiden von Kollisionen von Kraftfahrzeugen bekannt (EP 0 545 437 A2). Hier handelt es um eine selbsttätige Bremsung ohne Eingriffsmöglichkeit des Fahrers nach einer Unterschreitung eines vorgegebenen Sicherheitsabstandes. Eine solche selbsttätige Bremsung trifft den Fahrer in der Regel überraschend, da dieser in seiner Handlungsfreiheit drastisch eingeschränkt wird und auch beim umgekehrten Vorgang, wenn ihm seine Handlungsfreiheit wieder zurückgegeben wird, nachdem evtl. der Sicherheitsabstand wieder verlassen wurde. Es ist daher vorgesehen, diesem Sicherheitsabstand einen Warnabstand vorzuschalten, bei dessen Erreichen der Fahrer optisch oder akustisch gewarnt und auf die Möglichkeit einer selbsttätigen Bremsung bei einer weiteren Unterschreitung des Abstands ggf. zu einem vorausfahrenden Fahrzeug hingewiesen und vorbereitet wird.

Die Patentschrift DE 42 09 047 C1 betrifft ein Verfahren zur Regelung des Abstandes zwischen fahrenden Fahrzeugen, bei dem eine automatische Adaption des Regelverhaltens an die aktuell vorliegende Fahrsituation, charakterisiert durch die Eigenfahrgeschwindigkeit und den Lenkwinkel eines Folgefahrzeugs, erfaßt und hierdurch die Akzeptanz für den Fahrzeugführer verbessert wird. Dabei wird die Fahrsituation in eine Anzahl von Klassen eingeteilt, wobei für jede Klasse eine bestimmte Regelcharakteristik vorgesehen ist. Eine Warnung des Fahrers bei Unterschreitung eines bestimmten Abstands zum vorausfahrenden Fahrzeug, insbesondere unter Berücksichtigung des Fahrstils des jeweiligen Fahrers, ist dort nicht erwähnt oder auch nur angeregt.

Das Dokument "Müller, R et. al: Intelligent Cruise Control with Fuzzy logic" betrifft eine Abstandsregelung unter Anwendung von Methoden der Fuzzy Control. Eine Warnung des Fahrers bei bestimmten Fahrsituationen ist nur insofern erwähnt, als daß beim Erfordernis eines starken Abbremsens oberhalb von 2,5 m/sec² eine Warnung an den Fahrer ausgegeben wird. Jedoch ist dort in keiner Weise angeregt, dieses Warnsignal bei Unterschreitung eines ermittelten Sollabstandes zu erzeugen, hierbei den Fahrstil des jeweiligen Fahrers zu berücksichtigen, derart, daß mit zunehmendem Sollabstand eine größere negative Regetabweichung zugelassen wird, innerhalb der noch keine Warnung erfolgt.

Die Aufgabe der Erfindung wird darin gesehen, durch weitere Maßnahmen die Akzeptanz einer Abstandsregelung für ein Fahrzeug durch einen Fahrer zu erhöhen.

Diese Aufgabe wird hinsichtlich eines Verfahrens zur Abstandsregelung für ein Fahrzeug mit den Merkmalen des Anspruchs 1 und hinsichtlich einer Vorrichtung zur Durchführung dieses Verfahrens mit den Merkmalen des Anspruchs 9 gelöst.

Erfindungsgemäß wird bei der Unterschreitung eines vorgegebenen Sollabstands durch einen Istabstand um einen bestimmten Schwellwert ein Warnsignal für einen Fahrer in Abhängigkeit seines Fahrverhaltens erzeugt. Der Fahrer wird dadurch auf einen Zustand aufmerksam gemacht, wenn die selbsttätig wirkende Abstandsregelung den vorgegebenen Sollabstand nicht einhalten kann und dieser deutlich unterschritten ist. Der Fahrer soll damit unter Berücksichtigung seines eigenen Fahrstils auf einen möglichen Gefahrenfall hingewiesen und ggf. zu einem direkten Eingriff angeregt werden.

Nach einer Ausführung der Erfindung wird der Schwellwert, welcher mit dem Differenzwert zwischen dem Soll- und dem Istabstand zu dem vorausfahrenden Fahrzeug verglichen wird, fahrerindividuell, d. h. auf die Fahrweise des Fahrers angepaßt, festgelegt.

Eine andere Ausbildung sieht vor, daß bereits der Sollabstand die unterschiedlichen Fahrweisen der jeweiligen Fahrer berücksichtigt und der Schwellwert ein prozentualer Wert des jeweiligen Sollabstandes ist. Als vorteilhaft werden ca. 30 % des jeweiligen Sollabstandes angesehen. Bei großen Sollabständen wird dann eine größere negative Regelabweichung zugelassen, innerhalb der noch keine Warnung für einen möglicherweise kritischen Fahrzustand erforderlich ist.

Nachfolgend wird die Erfindung anhand eines Ausführungsbeispiel näher beschrieben. Die zugehörige Zeichnung zeigt eine erfindungsgemäße Vorrichtung für eine Abstandsregelung schematisch als Regelkreis dargestellt.

Der Regelkreis 1 besteht aus einer Sollwertvorgabeeinrichtung 2, einem Regler 3, Stellgliedern 4, der Regelstrecke 5 sowie einer Einrichtung 6 zur Ermittlung des Istwerts.

Zudem sind eine Schwellwertvorrichtung 7 und eine Wameinrichtung 8 vorgesehen.

In der Sollwertvorgabeeinrichtung 2 wird ein bestimmter Sollabstandswert entsprechend einer bestimmten Folgezeit ermittelt und als Signal über die Leitung 9 einem Sollwerteingang des Reglers 3 zugeführt. Der Sollabstandswert wird in Abhängigkeit eines Fahrzeuggeschwindigkeitssignals und eines Signals, das Informationen über den Witterungs- und Straßenzustand enthält, ermittelt, wobei diese Signale über die Leitungen 10 und 11 der Sollwertvorgabeeinrichtung zugeführt werden. Zudem wird das Übertragungsverhalten der Sollwertvorgabeeinrichtung 2 zur Erhöhung der Akzeptanz der Abstandsregelung auf den jeweiligen Fahrer adaptiert. Eine andere Möglichkeit besteht in einer manuellen Anpassung innerhalb vorgegebener Grenzen durch den Fahrer selbst, was über ein Stellelement, angedeutet durch einen verstellbaren Widerstand 12, durchführbar ist.

Mit Hilfe der Einrichtung 6 zur Ermittlung des Istwerts wird der jeweilige Istabstandswert zu einem vorausliegenden Objekt, insbesondere einem vorausfahrenden Fahrzeug, ermittelt. Dazu können an sich bekannte Verfahren, wie Ultraschallverfahren, Infrarotverfahren, etc., verwendet werden. Ein entsprechendes Signal für einen Istabstandswert wird über die Leitung 13 einem Istwerteingang des Reglers 3 zugeführt.

Der Regler 3 führt einen Vergleich zwischen dem Sollabstandswert und dem istabstandswert durch und ist bestrebt eine Regelabweichung auszugleichen. Dazu werden entsprechend einem vorgegebenen Regelalgorithmus über die Leitung 14 Stellsignale an Stellglieder 4 gegeben. Dies sind Stellglieder, die je nach den Gegebenheiten eine Beschleunigung oder Abbremsung des Fahrzeugs bewirken.

Die Verstellung dieser Stellglieder wirkt sich gemäß Leitung 15 auf die Regelstrecke 5 aus. Die Regelstrecke 5 besteht hier aus dem Fahrzeug mit der Abstandsregeleinrichtung und einem vorausfahrenden Fahrzeug, wobei die Regelgröße deren gegenseitiger Abstand ist. Als regelungstechnische Störgröße 16 sind insbesondere Fahrmanöver des vorausfahrenden Fahrzeugs mit Geschwindigkeitsänderungen relevant, ebenso wie ein einscherendes Fahrzeuge, wodurch ein Verhältnis zu diesem nun vorausfahrenden Fahrzeug hergestellt wird.

Aufgrund des verwendeten Regelalgorithmus und des Verhaltens der Regelstrecke, insbesondere der begrenzten Möglichkeiten einer Beschleunigung und Abbremsung, ergibt sich am Ausgang 17 der Regelstrecke 5 ein bestimmter Istabstandswert, der im geschlossenen Regelkreis über die Leitung 13 wieder dem Regler 3 zugeführt wird.

Der Schwellwertvorrichtung 7 sind mit den Leitungen 18 und 19 die Signale für den Sollabstandswert und den Istabstandswert zugeführt. Die Höhe der Schwelle wird prozentual von dem auf das Fahrverhalten angepaßten Sollabstandswert bestimmt, beispielsweise in einer Größe von 30 %. In dem Fall, daß keine Sollabstandsanpassung an das Fahrverhalten des Fahrers erfolgt, ist eine Anpassung der Schwellwerthöhe an das individuelle Fahrverhalten über eine manuelle Verstelleinrichtung, durch den einstellbaren Widerstand 20 angedeutet, denkbar.
Die Schwellwertfunktion wird nur aktiviert, wenn eine negative Regelabweichung vorliegt, d.h. der Sollabstandswert größer als der Istabstandswert ist. Wenn ein durch den Schwellwert bestimmter Wamabstand zu einem vorausfahrenden Fahrzeug erreicht bzw. unterschritten ist, schaltet die Schwellwertvorrichtung 7, wodurch über Leitungen 21 und 22 eine Warnlampe 23 als optische Warnung und/oder ein Lautsprecher 24 als akustische Warnung angesteuert werden.

Der Sollabstandswert, der in der Sollvorgabeeinrichtung 2 gebildet wird, verändert sich entsprechend der momentanen Fahrzeuggeschwindigkeit, deren Geschwindigkeitssignal über die Leitung 10 zugeführt wird. Ebenso sind die individuell eingestellten Anpassungen und Vorgaben über den Widerstand 12 oder eine Adaptierung ihres Übertragungsverhaltens im Sollabstandswert berücksichtigt. Entsprechend werden diese Einstellungen und Vorgaben auch auf die Höhe des Schwellwerts in der Schwellwertvorrichtung 7 übertragen und berücksichtigt, da hier jeweils eine prozentuale Schwellenhöhe verwendet wird, die sich mit der Änderung des Sollabstandswertes ebenfalls verändert.

### BEZUGSZEICHENLISTE

- 1: Regelkreis
- 2: Sollwertvorgabeeinrichtung
- 3: Regler
- 4: Stellglieder
- 5: Regelstrecke
- 6: Einrichtung zur Ermittlung des Istabstandes
- 7: Schwellwertvorrichtung
- 8: Warneinrichtung
- 9: Leitung
- 10, 11: Leitung
- 12: Widerstand
- 13: Leitung
- 14: Leitung
- 15: Leitung
- 16: Störgröße
- 17: Ausgang
- 18, 19: Leitung
- 20: Widerstand

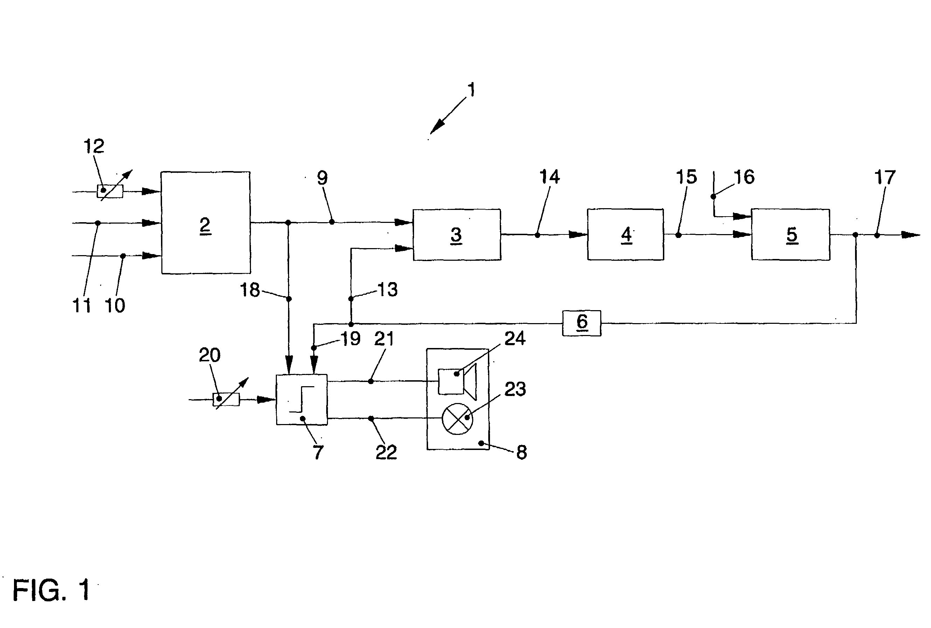

## Patentansprüche

1. Verfahren zur Abstandsregelung für ein Fahrzeug, bei dem zumindest in Abhängigkeit der momentanen Fahrgeschwindigkeit des Fahrzeuges ein Sollabstand zu einem vorausfahrenden Fahrzeug ermittelt und ein Istabstand zu dem vorausfahrenden Fahrzeug erfaßt wird, **dadurch gekennzeichnet, daß** bei einer Unterschreitung des ermittelten Sollabstandes durch den erfaßten Istabstand um einen Differenzwert als negative Regelabweichung ein für den Fahrer erfaßbares Warnsignal erzeugt wird, mittels dessen dem Fahrer signalisiert wird, daß die Abstandsregelung den vorgegebenen Sollabstand nicht automatisch einhalten kann und dieser deutlich unterschritten ist, wobei die Erzeugung des Warnsignals unter Berücksichtigung des Fahrstils des jeweiligen Fahrers derart erfolgt, daß mit zunehmendem Sollabstand eine größere negative Regelabweichung zugelassen wird, innerhalb der noch keine Warnung erfolgt.

2. Verfahren nach Anspruch 1, **dadurch gekennzeichnet, daß** der Differenzwert zwischen dem ermittelten Sollabstand und dem erfaßten Istabstand mit einem Schwellwert für das Warnsignal verglichen wird, wobei der Schwellwert in Abhängigkeit des Fahrverhaltens des Fahrers festgelegt wird.

3. Verfahren nach Anspruch 1, **dadurch gekennzeichnet, daß** bei der Ermittlung des Sollabstandes zu einem vorausfahrenden Fahrzeug das Fahrverhalten des Fahrers berücksichtigt wird.

4. Verfahren nach Anspruch 3, **dadurch gekennzeichnet, daß** der Sollabstand mittels einer Einrichtung zur Berechnung des Sollabstandes ermittelt wird, deren Übertragungsverhalten an das individuelle Fahrverhalten des Fahrers adaptiert wird.

5. Verfahren nach Anspruch 3, **dadurch gekennzeichnet, daß** der zumindest in Abhängigkeit der momentanen Fahrgeschwindigkeit ermittelte Sollabstand in Abhängigkeit einer fahrerindividuellen Folgezeit verändert wird.

6. Verfahren nach einem der Ansprüche 3 bis 5, **dadurch gekennzeichnet, daß** der Schwellwert ein prozentualer Wert des jeweiligen Sollabstandes ist.

7. Verfahren nach Anspruch 6, **dadurch gekennzeichnet, daß** der Schwellwert ca. 30% des jeweiligen Sollabstandes beträgt.

8. Verfahren nach einem der Ansprüche 1 bis 7, **dadurch gekennzeichnet, daß** das Fahrverhalten des Fahrers zumindest über sein Beschleunigungs- und Bremsverhalten ermittelt wird.

9. Vorrichtung zur Durchführung des Verfahrens nach einem der Ansprüche 1 bis 8 mit einer Einrichtung zur Ermittlung eines Sollabstandes (2) zu einem vorausfahrenden Fahrzeug, einer Einrichtung zur Erfassung des Istabstandes (6) zu dem vorausfahrenden Fahrzeug und einem Regler (3), dem der ermittelte Soll- und der erfaßte Istabstand zuführbar ist und der entsprechend eines Regelalgorithmus Stellglieder (4) für eine selbsttätige Beschleunigung oder Abbremsung des Fahrzeuges ansteuert, **dadurch gekennzeichnet, daß** eine Schwellwertvorrichtung (7) vorgesehen ist, der der jeweils momentane Sollabstand und Istabstand zuführbar ist und welche bei einer Unterschreitung des Sollabstandes durch den Istabstand den Differenzwert als negative Regelabweichung ermittelt, daß ein vom Fahrverhalten des Fahrers abhängiger Schwellwert für die negative Regelabweichung vorgegeben ist, wodurch ein bestimmter Wamabstand zu einem vorausfahrenden Fahrzeug festgelegt ist und daß der Schwellwertvorrichtung (7) eine Wameinrichtung (8) nachgeschaltet ist, die beim Unterschreiten des Schwellwertes durch von Differenzwert entsprechend dem Erreichen und Unterschreiten des Wamabstandes ein Warnsignal für den Fahrer abgibt, mittels dessen dem Fahrer signalisiert wird, daß die Abstandsregelung den vorgegebenen Sollabstand nicht automatisch einhalten kann und dieser deutlich unterschritten ist, wobei die Erzeugung des Warnsignals unter Berücksichtigung des Fahrstils des jeweiligen Fahrers derart erfolgt, daß mit zunehmendem Sollabstand eine größere negative Regelabweichung zugelassen wird, innerhalb der noch keine Warnung erfolgt.

10. Vorrichtung nach Anspruch 9, **dadurch gekennzeichnet, daß** das Übertragungsverhalten der Einrichtung (2) zur Ermittlung des Sollabstandes an das individuelle Fahrverhalten des jeweiligen Fahrers adaptiert ist.

11. Vorrichtung nach Anspruch 9, **dadurch gekennzeichnet, daß** der Einrichtung (2) zur Ermittlung des Sollabstandes ein mehrstufig oder kontinuierlich einstellbares Schaltmittel (12) zur Vorgabe unterschiedlicher Folgezeiten für die Veränderung des zumindest aus der Fahrgeschwindigkeit ermittelten Sollabstandes zugeordnet ist.

12. Vorrichtung nach einem der Ansprüche 9 bis 11, **dadurch gekennzeichnet, daß** der Schwellwert der Schwellwertvorrichtung (7) ein prozentualer Wert des jeweiligen Sollabstandes ist.

13. Vorrichtung nach Anspruch 9, **dadurch gekennzeichnet, daß** der Schwellwert der Schwellwerteinrichtung (7) über ein mehrstufig oder kontinuierlich verstellbares Schaltmittel (20) zumindest in bestimmten Bereichen manuell veränderbar ist.

## Claims

1. Method of distance control for a vehicle, wherein at least in dependence upon the instantaneous travel speed of the vehicle, a desired distance from a vehicle in front is determined and an actual distance from the vehicle in front is detected, **characterised in that** where the detected actual distance is less than the determined desired distance by a differential value as a negative deviation, a warning signal which can be detected by the driver is generated and indicates to the driver that the distance control is not automatically able to maintain the specified desired distance and the said actual distance is clearly less than the desired distance, wherein the warning signal is generated under consideration of the driving style of the respective driver such that as the desired distance increases, a greater negative deviation is permitted, within which a warning is still not provided.

2. Method according to claim 1, **characterised in that** the differential value between the determined desired distance and the detected actual distance is compared with a threshold value for the warning signal, wherein the threshold value is fixed in dependence upon the driving behaviour of the driver.

3. Method according to claim 1, **characterised in that** the driving behaviour of the driver is taken into consideration upon determining the desired distance from a vehicle in front.

4. Method according to claim 3, **characterised in that** the desired distance is determined by means of a device for calculating the desired distance, of which the transient response is adapted to suit the individual driving behaviour of the driver.

5. Method according to claim 3, **characterised in that** the desired distance which is determined at least in dependence upon the instantaneous travel speed is changed in dependence upon a follow-up time individual to the driver.

6. Method according to any one of the claims 3 to 5, **characterised in that** the threshold value is a percentage value of the respective desired distance.

7. Method according to claim 6, **characterised in that** the threshold value amounts to ca. 30% of the respective desired distance.

8. Method according to any one of the claims 1 to 7, **characterised in that** the driving behaviour of the driver is ascertained at least by means of his acceleration and braking behaviour.

9. Device for the purpose of implementing the method according to any one of the claims 1 to 8, having a device (2) for determining the desired distance from a vehicle in front, a device (6) for detecting the actual distance from the vehicle in front, and a controller (3), to which the determined desired distance and the detected actual distance can be supplied and which according to a control algorithm controls actuators (4) for automatic acceleration or braking of the vehicle, **characterised in that** a threshold value device (7) is provided, to which the respectively instantaneous desired distance and actual distance can be supplied and which ascertains the differential value as a negative deviation when the actual value is less than the desired distance, that a threshold value which is dependent upon the driving behaviour of the driver is specified for the negative deviation, whereby a predetermined warning distance from a vehicle in front is established and that connected downstream of the threshold value device (7) is a warning device (8) which transmits a warning signal for the driver when the distance is less than the threshold value by from [sic] differential value corresponding to the distance being equal to or less than the warning distance, said warning signal indicating to the driver that the distance control is not automatically able to maintain the specified desired distance and the said actual distance is clearly less than the desired distance, wherein the warning signal is generated under consideration of the driving style of the respective driver such that as the desired distance increases a greater negative deviation is permitted, within which a warning is still not provided.

10. Device according to claim 9, **characterised in that** the transient response of the device (2) for determining the desired distance is adapted to the individual driving behaviour of the respective driver.

11. Device according to claim 9, **characterised in that** the device (2) for determining the desired distance is allocated a switching means (12), which can be adjusted in multiple stages or continuously, for the purpose of specifying different follow-up times for changing the desired distance which is determined at least from the travel speed.

12. Device according to any one of the claims 9 to 11, **characterised in that** the threshold value of the threshold value device (7) is a percentage value of the respective desired distance.

13. Device according to claim 9, **characterised in that** the threshold value of the threshold value device (7) can be changed manually at least in predetermined ranges by means of a switching means (20) which can be adjusted in multiple stages or continuously.

## Revendications

1. Procédé de régulation de distance pour un véhicule, dans lequel une distance théorique est déterminée par rapport à un véhicule circulant en amont, au moins en fonction de la vitesse de marche momentanée du véhicule, et une distance réelle étant détectée par rapport au véhicule circulant en amont, **caractérisé en ce que**, lorsque la distance réelle détectée est inférieure à la distance théorique déterminée d'une valeur différentielle en tant qu'écart négatif de régulation, il est généré un signal d'avertissement perceptible par le conducteur, au moyen duquel le conducteur est averti que la régulation de distance ne peut pas respecter automatiquement la distance théorique prescrite, et que celle-ci est loin d'être atteinte, la génération du signal d'avertissement étant effectuée en tenant compte du style de conduite du conducteur respectif, de telle sorte qu'un écart négatif de régulation plus important, à l'intérieur duquel un avertissement n'a pas encore lieu, soit autorisé au fur et à mesure de l'augmentation de la distance théorique.

2. Procédé selon la revendication 1, **caractérisé en ce que** la valeur différentielle entre la distance théorique déterminée et la distance réelle détectée est comparée à une valeur de seuil pour le signal d'avertissement, la valeur de seuil étant définie en fonction du comportement de conduite du conducteur.

3. Procédé selon la revendication 1, **caractérisé en ce que** le comportement de conduite du conducteur est pris en considération lors de la détermination de la distance théorique par rapport à un véhicule circulant en amont.

4. Procédé selon la revendication 3, **caractérisé en ce que** la distance théorique est déterminée au moyen d'un dispositif destiné au calcul de la distance théorique, dont le comportement de transmission est adapté au comportement de conduite individuel du conducteur.

5. Procédé selon la revendication 3, **caractérisé en ce que** la distance théorique, qui est déterminée au moins en fonction de la vitesse de marche momentanée du véhicule, est modifiée en fonction d'un temps de séquence adapté individuellement au conducteur.

6. Procédé selon l'une quelconque des revendications 3 à 5, **caractérisé en ce que** la valeur de seuil est une valeur de pourcentage de la distance théorique respective.

7. Procédé selon la revendication 6, **caractérisé en ce que** la valeur de seuil représente environ 30 % de la distance théorique respective.

8. Procédé selon l'une quelconque des revendications 1 à 7, **caractérisé en ce que** le comportement de conduite du conducteur est déterminé au moins par l'intermédiaire de son comportement d'accélération et de freinage.

9. Dispositif destiné à la mise en oeuvre du procédé selon l'une quelconque des revendications 1 à 8, comportant un dispositif pour la détermination d'une distance théorique (2) par rapport à un véhicule circulant en amont, un dispositif pour la détection de la distance réelle (6) par rapport au véhicule circulant en amont, et un régulateur (3) auquel peuvent être transmises la distance théorique déterminée et la distance réelle détectée, et qui commande des organes de réglage (4) pour une accélération ou un freinage automatique du véhicule en fonction d'un algorithme de régulation, **caractérisé en ce qu'**il est prévu un dispositif (7) de valeur de seuil auquel peuvent être transmises la distance théorique et la distance réelle momentanées et qui, lorsque la distance réelle est inférieure à la distance théorique, détermine la valeur différentielle en tant qu'écart négatif de régulation, **en ce qu'**une valeur de seuil dépendant du comportement de conduite du conducteur est prescrite pour l'écart négatif de régulation, moyen par lequel une certaine distance d'avertissement est définie par rapport à un véhicule circulant en amont, et **en ce que**, en aval du dispositif (7) de valeur de seuil, est disposé un dispositif d'avertissement (8) qui, lorsque la valeur de seuil n'est pas atteinte, émet un signal d'avertissement pour le conducteur en fonction de la valeur différentielle correspondant à l'atteinte ou à la non-atteinte de la distance d'avertissement, au moyen duquel le conducteur est averti que la régulation de distance ne peut pas respecter automatiquement la distance théorique prescrite, et que celle-ci est loin d'être atteinte, la génération du signal d'avertissement étant effectuée en tenant compte du style de conduite du conducteur respectif, de telle sorte qu'un écart négatif de régulation plus important, à l'intérieur duquel un avertissement n'a pas encore lieu, soit autorisé au fur et à mesure de l'augmentation de la distance théorique.

10. Dispositif selon la revendication 9, **caractérisé en ce que** le comportement de transmission du dispositif (2) de détermination de la distance théorique est adapté au comportement de conduite individuel du conducteur respectif.

11. Dispositif selon la revendication 9, **caractérisé en ce qu'**un moyen de commutation (12) pouvant être réglé sur plusieurs niveaux ou en continu est associé au dispositif (2) de détermination de la distance théorique pour la prescription de différents temps de séquence destinés à la modification de la distance théorique, qui est déterminée au moins à partir de la vitesse de marche.

12. Dispositif selon l'une quelconque des revendications 9 à 11, **caractérisé en ce que** la valeur de seuil du dispositif (7) de valeur de seuil est une valeur de pourcentage de la distance théorique respective.

13. Dispositif selon la revendication 9, **caractérisé en ce que** la valeur de seuil du dispositif (7) de valeur de seuil peut être modifiée manuellement, au moins dans certaines plages, par l'intermédiaire d'un moyen de commutation (20) pouvant être réglé sur plusieurs niveaux ou en continu.
